# EUROPÄISCHE PATENTSCHRIFT

(11) **EP 1 907 243 B1**
(45) Veröffentlichungstag und Bekanntmachung des Hinweises auf die Patenterteilung: **09.06.2010**
(21) Anmeldenummer: 06760810.9
(22) Anmeldetag: 27.07.2006
(51) Int. Cl.: B60R 22/46

(54) **VORRICHTUNG ZUM STRAFFEN VON SICHERHEITSGURTEN**
DEVICE FOR TENSIONING SAFETY BELTS
DISPOSITIF POUR TENDRE DES CEINTURES DE SECURITE

(30) Priorität: 27.07.2005 AT 12622005
(43) Veröffentlichungstag der Anmeldung: 09.04.2008
(73) Patentinhaber: Kinzel, Albert, 5342 Abersee (AT)
(72) Erfinder: Kinzel, Albert, 5342 Abersee (AT)
(74) Vertreter: Babeluk, Michael
(86) Internationale Anmeldenummer: PCT/AT2006/000323
(87) Internationale Veröffentlichungsnummer: WO 2007/012103

(56) Entgegenhaltungen:
- EP-A2- 1 201 513
- WO-A-97/43149
- WO-A-98/36953
- WO-A-03/104050
- WO-A-2005/066001

## Beschreibung

Die Erfindung betrifft eine Vorrichtung zum Straffen von Sicherheitsgurten, mit einem Gehäuse, einem im Gehäuse angeordneten pyrotechnischen Treibsatz, der auf einen im Gehäuse beweglich angeordneten Kolben einwirkt, der mit einem Zugband in Wirkverbindung steht, das auf einer Antriebsscheibe aufgerollt ist, die mit einer Betätigungswelle verbunden ist, die dazu ausgebildet ist, ein Drehmoment auf eine an die Vorrichtung angekoppelte Aufrolleinrichtung für den Sicherheitsgurt auszuüben.

Es ist bekannt, dass die Wirkung von Sicherheitsgurten umso besser ist, je straffer diese um die zu schützende Person gelegt sind. Aus Gründen der Bequemlichkeit sind den Kräften, die den Gurt während des normalen Betriebs von Kraftfahrzeugen festziehen Grenzen gesetzt. Es werden deshalb in modernen Fahrzeugen Gurtstraffer vorgesehen, die bei Bedarf einen strammen Sitz des Sicherheitsgurts gewährleisten. Üblich sind dabei pyrotechnische Systeme, die mittels eines Treibsatzes eine Straffung des Sicherheitsgurts bewirken. Ein Beispiel eines solchen Systems ist in der WO 03/104050 A beschrieben, in der ein Treibsatz auf einen Kolben einwirkt, um den Gurt zu straffen. Nachteilig bei einem solchen System ist, dass die konstruktive Verbindung mit einer bestehenden Gurtaufrolleinrichtung nicht ohne weiteres möglich ist. Weiters ist der notwendige Bauraum relativ groß, so dass oft umfangreiche konstruktive Maßnahmen erforderlich sind, um eine solche Einrichtung vorsehen zu können. Letztlich muss bei der bekannten Vorrichtung der Zylinderraum, in dem die Treibladung wirkt, gegenüber dem Seil abgedichtet werden, das die Verkürzung der Sicherheitsgurts bewirkt, da dieses durch den Zylinderraum hindurchgeführt ist.

Die EP 1 201 513 A zeigt einen Gurtspanner, der der Vorrichtung aus dem Oberbegriff des Anspruchs 1 entspricht, der in einer Ausführungsvariante einen linear in einem Gehäuse beweglichen Kolben aufweist und der in einer anderen Ausführungsvariante Wälzkörper aufweist, um die das Zugband geschlungen ist. Dies losen Wälzkörper liegen bei Betätigung unter Druck aneinander an, so dass durch unvermeidliche Toleranzen stets die Gefahr einer Verklemmung und dami einer wesentliche Erhöhung der Reibung gegeben ist. Diese Gefahr besteht insbesondere bei den vordersten Wälzkörpern.

Aufgabe der vorliegenden Erfindung ist es, diese Nachteile zu vermeiden und eine Lösung anzugeben, die einen einfachen und kompakten Aufbau aufweist und die nur einen geringen Bauraum beansprucht, sowie wenig fehleranfällig ist. Eine weitere Aufgabe der Erfindung ist es, eine Lösung anzugeben, die leicht an bestehende Systeme anpassbar ist. Weiters soll mit einem vorgegebenen Treibsatz eine möglichst große Straffung des Sicherheitsgurts erzielt werden.

Erfindungsgemäß ist vorgesehen, dass der Kolben mit einer Schubkette in Verbindung steht und dass das Zugband an einem Ende am Gehäuse befestigt ist und über eine Umlenkrolle am Ende der Schubkette umgelenkt ist. Durch die erfindungsgemäße Ausbildung wird erreicht, dass die Vorrichtung einen kompakten Aufbau aufweist und ohne Schwierigkeiten an bestehende Aufrolleinrichtungen angepasst werden kann. Die Lagerung der Umlenkrolle an der Schubkette ermöglicht es, eine wesentlich geringere Reibung zu erreichen als dies bei bekannten Lösungen der Fall ist.

Es ist wichtig, dass der Kolben mit einer Schubkette in Verbindung steht. Dadurch ist es möglich, zusätzliche Abdichtungen des Zylinderraums zu vermeiden, die aufwändig und fehleranfällig sind. Der konstruktive Aufbau kann besonders kompakt ausgeführt werden, wenn die Schubkette in einer gekrümmten Führung im Gehäuse geführt ist.

Ein besonders großer Weg, um den der Sicherheitsgurt verkürzt werden kann, wird dadurch erreicht, dass das Zugband an einem Ende am Gehäuse befestigt ist und über eine Umlenkrolle am Ende der Schub umgelenkt ist. Die Wirkbewegung des Zugbands entspricht dabei etwa dem doppelten Kolbenhub.

Eine weitere Verkleinerung des benötigten Bauraums wird dadurch erreicht, dass der Kolben im Wesentlichen in einer Kreisbahn um die Antriebsscheibe geführt ist. Der Kolben bewegt sich dabei nicht in einem Zylinder sondern in einem im Wesentlichen torusförmigen Hohlraum, was eine weitere Verkleinerung der Vorrichtung ermöglicht. In diesem Zusammenhang ist es auch von besonderem Vorteil, wenn im Gehäuse eine im Wesentlichen U-förmige Führung für Kolben und Antriebskette vorgesehen ist, die sich um die Antriebsscheibe erstreckt.

In der Folge wird die Erfindung anhand des in den Figuren dargestellten Ausführungsbeispiels näher erläutert. Es zeigen:
- Fig. 1: schematisch eine erfindungsgemäße Vorrichtung;
- Fig. 2: und Fig. 3 Details zur Erklärung der Funktion;
- Fig. 4: ein weiteres Detail;
- Fig. 5: eine Ansicht einer Antriebsscheibe; und
- Fig. 6: einen Schnitt nach Linie VI - VI in Fig. 5.

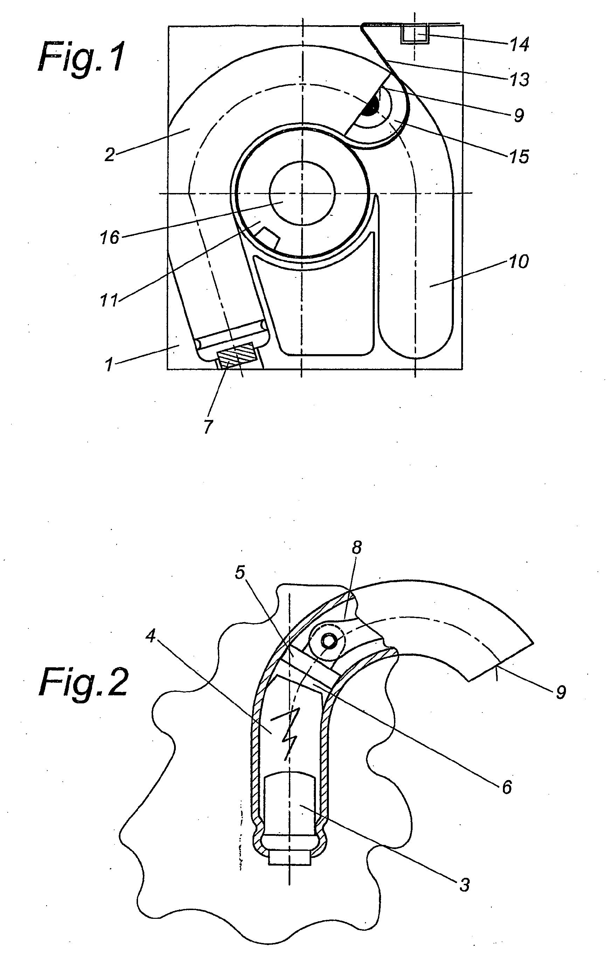

Die Vorrichtung von Fig. 1 besteht aus einem Gehäuse 1, mit einer gekrümmten, innen torusförmigen Führung 2, in der ein pyrotechnischer Treibsatz 3 als Gasgenerator vorgesehen ist. Der Brennraum 4 wird von einem Kolben 5 abgeschlossen, der eine Dichtung 6 aus Kunststoff aufweist. Der Treibsatz 3 ist mit einem Stecker 7 zur Zündung versehen.

Am Kolben 5 ist eine Schubkette 8 angebracht, die ebenfalls in der Führung 2 geführt ist. Die Schubkette 8 tritt an der Öffnung 9 aus der Führung 2 heraus und wird weiter in einer Ausnehmung 10 in Radialrichtung geführt. Die Führung 2 und die Ausnehmung 10 bilden etwa eine U-förmige Struktur, die sich um eine Antriebsscheibe 11 herum erstreckt. An der Antriebsscheibe 11 ist bei 12 ein Zugband 13 befestigt, das im ursprünglichen Zustand, wie er in der Fig. 1 dargestellt ist, um die Antriebsscheibe 11 gewickelt ist. Das andere Ende des Zugbands 13 ist bei 14 am Gehäuse 1 befestigt. Von dort ausgehend ist das Zugband 13 um die vorderste Rolle 15 der Schubkette 8 geführt und weiter zur Antriebsscheibe 11 umgelenkt. Diese ist fest mit einer Betätigungswelle 16 verbunden, die auf eine nicht dargestellte Aufrolleinrichtung einwirkt, um bei Bedarf den Sicherheitsgurt zu spannen. Unterhalb der Antriebsscheibe 11 ist eine Freistellung 17 vorgesehen.

Durch die Umlenkung des Zugbands 13 wird eine Übersetzung im Verhältnis 2:1 erreicht, so dass bei beschränkten Kolbenhub mehr als eine Umdrehung der Antriebsscheibe 11 erreicht werden kann. Besonders vorteilhaft ist in diesem Zusammenhang, dass durch Austausch der Antriebsscheibe 11 bei Veränderung des Durchmessers der Verdrehwinkel an die jeweiligen Anforderungen angepasst werden kann, so dass die Vorrichtung ohne Aufwand vielseitig einsetzbar ist.

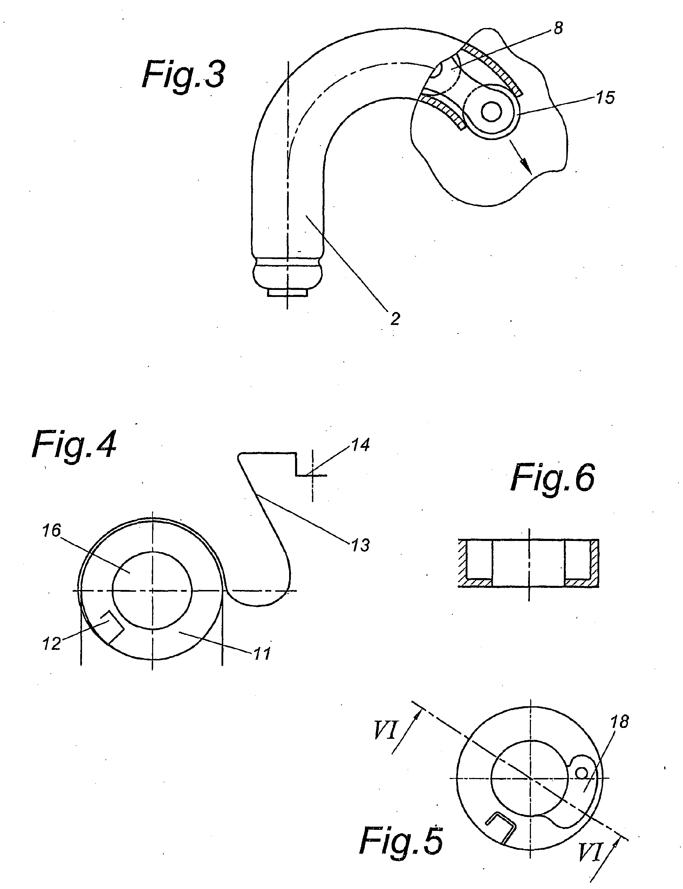

Fig. 2 zeigt die Betätigung des Kolbens 5 durch den Treibsatz 3 im Detail und Fig. 4 die Lagerung der Schubkette 8. Fig. 5 stellt Antriebsscheibe 11 samt Zugband 13 im Detail dar. Fig. 5 zeigt eine Ausführung der Antriebsscheibe 11 mit einer Freistellung 18 für einen nicht dargestellten Kupplungszahn.

Die erfindungsgemäße Vorrichtung ermöglicht es, bei geringstmöglichem Bauraum eine hohe Funktionalität zu erreichen.

## Patentansprüche

1. Vorrichtung zum Straffen von Sicherheitsgurten, mit einem Gehäuse, einem im Gehäuse (1) angeordneten pyrotechnischen Treibsatz (3), der auf einen im Gehäuse (1) beweglich angeordneten Kolben (5) einwirkt, der mit einem Zugband (13) in Wirkverbindung steht, das auf einer Antriebsscheibe (11) aufgerollt ist, die mit einer Betätigungswelle (16) verbunden ist, die dazu ausgebildet ist, ein Drehmoment auf eine an die Vorrichtung angekoppelte Aufrolleinrichtung für den Sicherheitsgurt auszuüben, **dadurch gekennzeichnet, dass** der Kolben (5) mit einer Schubkette (8) in Verbindung steht und dass das Zugband (13) an einem Ende (14) am Gehäuse (1) befestigt ist und über eine Umlenkrolle (15) am Ende der Schubkette (8) umgelenkt ist.

2. Vorrichtung nach Anspruch 1, **dadurch gekennzeichnet, dass** die Schubkette (8) in einer gekrümmten Führung (2) im Gehäuse (1) geführt ist.

3. Vorrichtung nach Anspruch 1 oder 2, **dadurch gekennzeichnet, dass** der Kolben (5) im Wesentlichen in einer Kreisbahn um die Antriebsscheibe (11) geführt ist.

4. Vorrichtung nach Anspruch 2 oder 3, **dadurch gekennzeichnet, dass** im Gehäuse (1) eine im Wesentlichen U-förmige Führung (2, 10) für Kolben (5) und Schubkette (8) vorgesehen ist, die sich um die Antriebsscheibe (11) erstreckt.

## Claims

1. Device for tightening safety belts, comprising a housing (1) and a pyrotechnic charge (3) located in said housing, which charge (3) is acting on a piston (5) that is movably positioned in the housing (1), said piston (5) acting on a strap (13) that is wound on a driving disc (11), said disc (11) being attached to an activating shaft (16), which is configured to exert a torque on the retractor device of the safety belt coupled to the tightening device, **characterised in that** the piston (5) is connected to a rigid chain (8), and that the strap (13) is fastened to the housing (1) at one end (14) and is redirected via a redirecting roller (15) at the end of the rigid chain (8).

2. Device according to claim 1, **characterised in that** the rigid chain (8) is guided in a curved guide track (2) in the housing (1).

3. Device according to claim 1 or 2, **characterised in that** the piston (5) is guided in an essentially circular path around the driving disc (11).

4. Device according to claim 2 or 3, **characterised in that** an essentially U-shaped guiding track (2, 10) extending around the driving disc (11) is provided for the piston (5) and the rigid chain (8).

## Revendications

1. Dispositif tendeur de ceinture de sécurité comportant un boîtier, une capsule pyrotechnique (3) logé dans le boîtier (1), agissant sur un piston (5) mobile dans le boîtier (1), le piston coopérant avec une bande de traction (13) enroulée sur une poulie d'entraînement (11) elle-même reliée à un arbre d'actionnement (16) réalisé pour exercer un couple sur une installation d'enroulement de la ceinture de sécurité, couplée au dispositif,
**caractérisé en ce que**
- le piston (5) coopère avec une chaîne de poussée (8) et
- une extrémité (14) de la bande de traction (13) est fixée au boîtier (1) et la bande est déviée pour passer sur un galet de renvoi (15) à l'extrémité de la chaîne de poussée (8)

2. Dispositif selon la revendication 1,
**caractérisé en ce que**
la chaîne de poussée (8) est guidée dans un moyen de guidage court (2) du boîtier (1).

3. Dispositif selon la revendication 1 ou 2,
**caractérisé en ce que**
le piston (5) est guidé principalement sur une trajectoire circulaire autour de la poulie d'entraînement (11).

4. Dispositif selon la revendication 2 ou 3,
**caractérisé en ce que**
le boîtier (1) comporte un moyen de guidage (2, 10) principalement en forme de U pour le piston (5) et la chaîne de poussée (8), celle-ci entourant la poulie d'entraînement (11).
